# EUROPEAN PATENT SPECIFICATION

(11) **EP 0 655 791 B1**
(45) Date of publication and mention of the grant of the patent: **28.01.1998**
(21) Application number: 94116896.5
(22) Date of filing: 26.10.1994
(51) Int. Cl.: H01M 4/52, H01M 4/48

(54) **Method of producing active cathode material for lithium secondary battery**
Verfahren zur Herstellung von aktivem Kathodenmaterial für Lithium-Sekundärbatterie
Méthode de production de matériau actif cathodique pour batterie secondaire au lithium

(30) Priority: 29.10.1993 JP 272847/93
(43) Date of publication of application: 31.05.1995
(73) Proprietor: SONY CORPORATION, Tokyo (JP)
(72) Inventor: Yamamoto, Yoshikatsu, c/o Sony Energytec Inc., Koriyama, Fukushima-ken (JP)
(74) Representative: Müller, Frithjof E., Dipl.-Ing.

(56) References cited:
- EP-A- 0 391 281
- EP-A- 0 468 942

## Description

### Background of the Invention

### Field of the Invention

This invention relates to a method of producing active cathode material for lithium secondary battery having a composition of LiₓNi_{y}M_{1-y}O₂.

### Description of the Related Art

In recent years, high performance, compact and portable electronic equipments have been developed with the progress of the electronic technology. Thus, it has been required for secondary batteries used in these electronic equipments to have high energy density.

Hitherto, as a secondary battery used in these electronic equipments, nickel cadmium battery, lead battery and the like were used. However, these batteries have lower discharge potential, and are therefore insufficient in providing higher energy density.

In view of this, in recent years, there have progressed researches/developments of lithium secondary batteries in which material capable of doping/undoping lithium ion, such as, for example, lithium, lithium alloy or carbon material is used as active anode material; lithium compound oxide, such as, for example, lithium cobalt compound oxide, lithium nickel compound oxide or lithium nickel cobalt compound oxide, etc. is used as active cathode material; and a solution in which lithium electrolyte such as LiCℓO₄, etc. is dissolved into a non-aqueous solvent is used as electrolytic solution. This lithium secondary battery has high battery voltage, high energy density, less self-discharge, and excellent cycle characteristic. It has been confirmed that, among the above-mentioned materials, employment of lithium nickel compound oxide (LiNiO₂) as the cathode provides higher energy as compared to employment of lithium cobalt compound oxide (LiCoO₂) as indicated by U.S.P. No. 4302518, U.S.P. No. 4357215 and U.S.P. No. 4980080. In addition, nickel has yield greater than that of cobalt as material and is therefore inexpensive. Also from a viewpoint of this, development of lithium secondary battery using lithium nickel compound oxide or lithium nickel cobalt compound oxide including higher percentage of nickel component than cobalt component is being expected.

However, in a lithium secondary battery using lithium nickel compound oxide or lithium nickel cobalt compound oxide including high composition ratio of nickel component, there is a tendency for battery capacity to be likely to have unevenness, thus disadvantageously failing to maintain prescribed quality.

It is considered that the reason why such a problem takes place is that the composition of a lithium nickel compound oxide or lithium nickel cobalt compound oxide including a high composition ratio of nickel component is apt to vary in dependency upon the synthetic condition at the synthetic stage, so it is difficult to obtain lithium secondary batteries having uniform characteristic. Accordingly, it is considered that, in order to allow a lithium secondary battery to have higher energy and to suppress unevenness of battery capacity, it is indispensable to develop a method capable of synthesizing, by uniform composition, a lithium nickel compound oxide or lithium nickel cobalt compound oxide having a high composition ratio of nickel component.

EP-A-0 391 281 describes a method of producing LiₓNi_{y}Co_{1-y}O₂ compounds (0 < x ≤ 1: 0.90 < y ≤ 1.00) by baking a mixture of Li, Ni and Co salts under oxygen atmosphere without indicating the oxygen pressure during baking.

### Object and Summary of the Invention

This invention has been made in view of such actual circumstances of the prior art, and its obejct is to provide a method of producing active cathode material for lithium secondary battery. which can synthesize active cathode material having uniform composition and characteristic and having excellent function as the cathode.

To achieve the above-mentioned object, in accordance with this invention, there is provided a method of producing active cathode material for lithium secondary battery causing a low degree of unevenness of battery capacity, in which a mixture of a lithium salt and a transition metal salt is baked or burned under oxygen atmosphere, and in synthesizing a lithium transition metal compound oxide having a composition of LiₓNi_{y}M_{1-y}O₂ (M is one kind of transition metal or more, and x, y are respectively expressed as 0.05 ≤ x ≤ 1.10, 0.5 ≤ y ≤ 1.0), wherein the oxygen pressure in the atmosphere in baking is set to 147.1 kPa or more at least at a certain time of the baking process.

Moreover, the lithium transition metal compound oxide to be synthesized has a composition of LiₓNi_{y}Co_{1-y}O₂ (x, y are respectively expressed as 0.05 ≤ x ≤ 1.10, 0.5 ≤ y ≤ 1.0).

The active cathode material manufactured in this invention is a lithium transition metal compound oxide having a composition of LiₓNi_{y}M_{1-y}O₂ (M is one kind of transition metal or more, and x, y are respectively expressed as 0.05 ≤ x ≤ 1.10, 0.5 ≤ y ≤ 1.0).

The lithium transition metal compound oxide of such composition is synthesized by baking, under oxygen atmosphere, a mixture of a lithium salt, nickel salt and transition metal salt corresponding to M in the composition formula.

In this invention, as stated above, in synthesizing the lithium transition metal compound oxide, in order to obtain an active cathode material having uniform composition and characteristic, the oxygen pressure in the atmosphere is set to 147. 1 kPa (1.5 kg/cm²) or more at least at a certain time of the baking process to carry out baking under pressurized oxygen atmosphere. It is considered that the reason why a lithium transition metal compound oxide having uniform composition and characteristic is obtained by carrying out baking under pressurized oxygen atmosphere as stated above is as follows.

Namely, in order to bake a mixture of a lithium salt and a transition metal salt under oxygen atmosphere to synthesize a lithium transition metal compound oxide, it is required that the transition metal is sufficiently oxidized in baking so that it becomes trivalent. However, among transition metals, nickel is difficult to be in triatomic oxidation state as compared to, e.g., cobalt, etc. For this reason, in the case of attempting to synthesize a lithium transition metal compound oxide having a higher Ni composition ratio of 0.5 to 1.0 as indicated by the above-mentioned composition formula, a large quantity of Ni would participate in the reaction. Accordingly, the reaction is difficult to proceed under an oxygen atmosphere of ordinary pressure. For this reason, there would take place unevenness in the oxidation state of nickel by the synthesized lithium transition metal compound oxide.

At this time, when the oxygen pressure in the atmosphere in baking is increased to 147.1 kPa or more, oxidation of nickel is promoted. Thus, nickel easily becomes trivalent. Accordingly, the reaction smoothly proceeds. Thus, a lithium transition metal oxide having a high Ni composition ratio indicated by the above-mentioned composition formula is synthesized with uniform characteristic.

It should be noted that it is not required that the oxygen pressure of 147.1 kPa or more is maintained over the entirety of the baking process, but if the oxygen pressure is 147. 1 kPa or more at least at a certain time period of the baking process, a lithium transition metal oxide having sufficiently uniform characteristic can be obtained.

It should be noted that it is not rather preferable to allow the oxygen pressure in the baking atmosphere to be exceedingly higher, and it is desirable to hold that oxygen pressure down to less than 980.6 kPa (10kg/cm²). The reason why an oxygen pressure in such a range is employed is that since its effect is already saturated in the vicinity of 980.6 kPa of oxygen pressure; even if the oxygen pressure is elevated to more than that value, further improvement in uniformness of characteristic cannot be made, and that expensive synthesizing system is required for allowing oxygen pressure to be 980.6 kPa or more, resulting in increased manufacturing cost, etc.

As lithium salt, nickel salt and transition metal salt corresponding to M which are baked under pressurized oxygen atmosphere in a manner stated above, salts ordinarily used as the starting material in the synthesis of a lithium transition metal compound oxide, such as, for example, hydroxide salt or oxide salt, etc. can be all used. Moreover, as transition metal M, it is desirable to select Co. LiₓNiₓCo_{1-y}O₂ greatly contributes to realization of a battery of large capacity particularly as compared to LiₓNi_{y}M_{1-y}O₂ where M is a transition metal except for Co.

In order to constitute the cathode by using, as active cathode material, a lithium transition metal compound oxide synthesized in this way, it is sufficient to mix, e.g., the lithium transition metal compound oxide together with a conductive material or a binder to prepare a cathode depolarizing mix to coat the cathode depolarizing mix onto a cathode collector. The cathode constituted in this way can exhibit excellent performance as the cathode without causing unevenness of battery capacity because the active cathode material is excellent in uniformness of composition and characteristic.

In this invention, as anode and non-aqueous electrolyte constituting the battery together with the cathode using the lithium transition metal compound oxide as active cathode material, materials recited below are used.

Namely, as the anode, there can be used a material capable of doping/undoping lithium ion, e.g., thermal decomposed carbon, coke (pitch coke, needle coke, petroleum coke, etc.), graphite, carbon in the form of glass, organic high molecular compound baked body (material obtained by baking phenol resin or furan resin, etc. at a suitable temperature to carbonize it), carbon fiber, carbonaceous material such as activated carbon, etc., metallic lithium, and lithium alloy. In addition, a polymer such as polyacetylene, polypyrrole, etc. can be used.

Particularly, as preferable material, there is enumerated a carbonaceous material in which spacing of the (002) plane is 0.370 nm or more, true density is less than 1.70 g/cm³, and there is no exothermic peak at 700 °C or more in terms of differential thermal analysis in air flow.

On the other hand, as non-aqueous electrolytic solution, there may be used an electrolytic solution in which an electrolyte, e.g., a lithium salt, etc. is dissolved into an organic solvent. As the organic solvent, although specifically limited, there may be used, e.g., a solvent consisting of propylene carbonate, ethylene carbonate, 1,2-dimethoxy ethane, γ-butyrolactone, tetrahydrofuran, 2-methyl-tetrahydrofuran, 1,3-dioxolan, sulfolan, acetonitrile, dimethyl carbonate, diethyl carbonate, or dipropyl carbonate etc., or a mixed solvent including two kinds of the above materials or more.

As the electrolyte, LiCℓO₄, LiAsF₆, LiPF₆, LiBF₄, LiB(C₆H₅)₄, LiCℓ, LiBr, CH₃SO₃Li, CF₃SO₃Li, etc. may be used.

When the mixture of a lithium salt and transition metal salt is baked under oxygen atmosphere, and in synthesizing the lithium transition metal compound oxide having the composition of LiₓNi_{y}M_{1-y} O₂ (M is one kind of transition metal or more, and x, y are respectively expressed as 0.05 ≤ x ≤ 1.10, 0.5 < y ≤ 1.0), the oxygen pressure in the atmosphere in baking is set to 147.1 kPa or more at least at a certain time of the baking process, whereby the synthetic reaction smoothly proceeds. Thus, the lithium transition metal compound oxide of the above-mentioned composition is synthesized with uniform composition and characteristic.

Accordingly, when the cathode is constituted by using the lithium transition metal compound oxide synthesized in this way as active cathode material, a lithium secondary battery of uniform quality of no unevenness in battery capacity is realized.

### Brief Description of the Drawings

FIG. 1 is a schematic longitudinal cross sectional view showing the configuration of a lithium secondary battery to which an active cathode material manufactured by a manufacturing method of this invention is applied.

FIG. 2 is a characteristic diagram showing the relationship between oxygen pressure in the atmosphere in baking and the degree of unevenness of battery capacity.

### Description of the Preferred Embodiments

Preferred embodiments of this invention will now be described in accordance with experimental results.

### Embodiment 1

Lithium hydroxide and nickel oxide were mixed so that Li:Ni (mol ratio) = 1.0:1.0. Then, this mixture was baked for 12 hours at a temperature of 800°C under pressurized oxygen atmosphere of oxygen pressure of 147.1 kPa (1.5 Kg/cm²) to synthesize a lithium transition metal compound oxide.

### Embodiment 2 to Embodiment 6

In a manner similar to the embodiment 1 except that the oxygen pressure in the atmosphere in baking is changed as indicated by Table 1, lithium transition metal compound oxides were synthesized.

### Embodiment 7

Lithium hydroxide and nickel oxide were mixed so that Li:Ni (mol ratio) = 1.0:1.0. Then, this mixture was baked for 6 hours at a temperature of 800°C under pressurized oxygen atmosphere of oxygen pressure of 98.1 kPa (1 Kg/cm²) to subsequently bake that mixture for 6 hours at a temperature of 800°C with the oxygen pressure being changed to 490.3 kPa (5 Kg/cm²), thus to synthesize a lithium transition metal compound oxide.

### Embodiment 8

Lithium hydroxide, nickel oxide and cobalt oxide were mixed so that Li:Ni:Co ratio (mol ratio) = 1.0:0.5:0.5 thereafter to bake it for 6 hours at a temperature of 800°C under pressurized oxygen atmosphere of oxygen pressure of 490.3 kPa, thus to synthesize a lithium transition metal compound oxide.

### Comparative Example 1

Lithium hydroxide and nickel oxide were mixed so that Li:Ni (mol ratio) = 1.0:1.0 thereafter to bake it for 12 hours at a temperature of 800°C under pressurized oxygen atmosphere of oxygen pressure of 98.1 kPa (1 Kg/cm²), thus to synthesize a lithium transition metal compound oxide.

### Comparative Example 2

Lithium hydroxide and nickel oxide were mixed so that Li:Ni (mol ratio) = 1.0:1.0 thereafter to bake it for 12 hours at a temperature of 800°C under pressurized oxygen atmosphere of oxygen pressure of 117.7 kPa (1.2 Kg/cm²), thus to synthesize a lithium transition metal compound oxide.

### Comparative Example 3

Lithium hydroxide, nickel oxide and cobalt oxide were mixed so that Li:Ni:Co ratio (mol ratio) = 1.0:0.4:0.6 thereafter to bake it for 12 hours at a temperature of 800°C under pressurized oxygen atmosphere of oxygen pressure of 98.1 kPa (1 kg /m²), thus to synthesize a lithium transition metal compound oxide.

### Comparative Example 4

Lithium hydroxide, nickel oxide and cobalt oxide were mixed so that Li:Ni:Co ratio (mol ratio) = 1.0:0.4:0.6 thereafter to bake it for 12 hours at a temperature of 800°C under pressurized oxygen atmosphere of oxygen pressure of 490.3 kPa (5 kg/cm²), thus to synthesize a lithium transition metal compound oxide.

### Comparative Example 5

Lithium hydroxide, nickel oxide and cobalt oxide were mixed so that Li:Ni:Co ratio (mol ratio) = 1.0:0.5:0.5 thereafter to bake it for 12 hours at a temperature of 800°C under pressurized oxygen atmosphere of oxygen pressure of 98.1 kPa (1 kg/cm²), thus to synthesize a lithium transition metal compound oxide.

The ratio of Li:Ni:Co of the starting material and the oxygen pressure in baking in the embodiments 1 to 8 and the comparative examples 1 to 5 are collectively shown in Table 1.

**Table 1**

| | Li:Ni:Co RATIO | OXYGEN PRESSURE |
|---|---|---|
| EMBODIMENT 1 | 1:1:0 | 147.1kPa |
| EMBODIMENT 2 | 1:1:0 | 196.1kPa |
| EMBODIMENT 3 | 1:1:0 | 294.2kPa |
| EMBODIMENT 4 | 1:1:0 | 490.3kPa |
| EMBODIMENT 5 | 1:1:0 | 686.4kPa |
| EMBODIMENT 6 | 1:1:0 | 970.8kPa |
| EMBODIMENT 7 | 1:1:0 | 98.1kPa→490.3kPa |
| EMBODIMENT 8 | 1:0.5:0.5 | 490.3kPa |
| COMPARATIVE EXAMPLE 1 | 1:1:0 | 98.1kPa |
| COMPARATIVE EXAMPLE 2 | 1:1:0 | 117.7kPa |
| COMPARATIVE EXAMPLE 3 | 1:0.4:0.6 | 98.1kPa |
| COMPARATIVE EXAMPLE 4 | 1:0.4:0.6 | 490.3kPa |
| COMPARATIVE EXAMPLE 5 | 1:0.5:0.5 | 98.1kPa |

With respect to the lithium transition metal compound oxide synthesized in this way, an X-ray diffraction measurement was first conducted.

As a result, in the embodiments 1 to 7 and the comparative examples 1 and 2, an X-ray diffraction spectrum suggesting that a lithium transition metal compound oxide having the composition of LiNiO₂ was synthesized was observed. On the other hand, with respect to the embodiment 8 and the comparative examples 3 to 5, an X-ray diffraction spectrum having a diffraction pattern which is extremely similar to the case of LiNiO₂ although the diffraction position and the diffraction intensity are different and suggesting that spacing is different was obtained. From these facts, it was judged that a solid solution in which a portion of nickel in LiNiO₂ is replaced by cobalt was synthesized.

Then, synthesis processes (synthesis 1 to synthesis 5) of a lithium transition metal compound oxide were respectively conducted five times in total similarly to the embodiments 1 to 8 and the comparative examples 1 to 5.

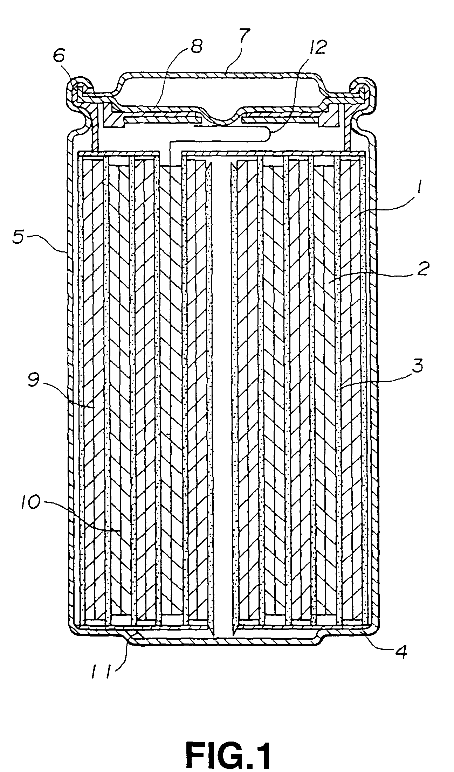

Then, by using, as the active cathode material, the lithium transition metal compound oxide obtained, a cylindrical lithium secondary battery shown in FIG. 1 was prepared as follows.

Initially, a belt shaped cathode was made up.

The synthesized lithium transition metal compound oxide of 91% by weight, graphite of 6% by weight serving as conductive material, and polyvinylidene fluoride of 3% by weight serving as binder were mixed to prepare a cathode depolarizing mix. This cathode depolarizing mix was dispersed into N-methyl-2-pyrrolidone so that a cathode depolarizing mix slurry results. This cathode depolarizing mix slurry is coated on both surfaces of a belt-shaped aluminum foil serving as cathode collector 10 to dry it thereafter to implement compression-molding thereto by using a roller press machine, thus to prepare cathode 2.

Then, a belt shaped anode was made up.

Petroleum pitch was used as the starting material. A functional group including oxygen was introduced into petroleum pitch (oxygen bridging). Then, the petroleum pitch into which the functional group including oxygen was introduced was baked at a temperature of 1000°C in the atmosphere of an inactive gas to obtain a graphitization resistive carbon material having a property similar to carbon in the form of glass. When an X-ray diffraction measurement was conducted with respect to the graphitization resistive carbon material, spacing of the (002) plane was 0.376 nm, and the true density was 1.58/cm³. The carbon material obtained in this way was used as the active anode material to mix the carbon material of 90% by weight and polyvinylidene fluoride of 10% by weight serving as binder to prepare an anode depolarizing mix. This anode depolarizing mix is dispersed into N-methyl-2-pyrrolidone so that an anode depolarizing mix slurry results. This anode depolarizing mix slurry was coated on both surfaces of a belt shaped copper foil serving as anode collector 9 to dry it thereafter to implement compression-molding thereto by using a roller press machine to prepare anode 1.

The cathode 2 and the anode 1 which have been made up in a manner stated above are stacked in order through separator 3 comprised of micro-porous polypropylene film having a thickness of 25 µm. Thereafter, such structure is wound many times of numbers in a spiral form to thereby prepare an electrode winding body.

Then, insulating plate 4 is inserted into the bottom portion of battery can 5 of steel to which a nickel plating is implemented to accommodate the electrode winding body thereinto. For the purpose of collecting electricity of the anode, one end of anode lead 11 of nickel is pressure-connected to anode 2, and the other end thereof is welded to the battery can. In addition, in order to collect electricity of the cathode, one end of cathode lead 12 of aluminum is attached to cathode 1, and the other end is welded to battery cover 7 having a current interrupting mechanism.

Then, an electrolytic solution in which LiPF₆ is dissolved into a mixed solvent of propylene carbonate of 50% by volume and diethyl carbonate of 50% by volume at a rate of 1 mol is poured into the battery can 5. Then, the battery 5 is caulked through an insulating sealed gasket on which asphalt is coated to thereby fix battery cover 7 to prepare ten cylindrical batteries in total having a diameter of 20 mm and a height of 50 mm.

Then, charging was conducted under the condition of an upper limit voltage of 4.2 V (volts) and a current of 1A (amperes) with respect to the batteries thus prepared. Thereafter, a constant current discharge was conducted under the condition of a current of 0.5A and a discharge final voltage of 2.75V to thereby investigate respective battery capacities.

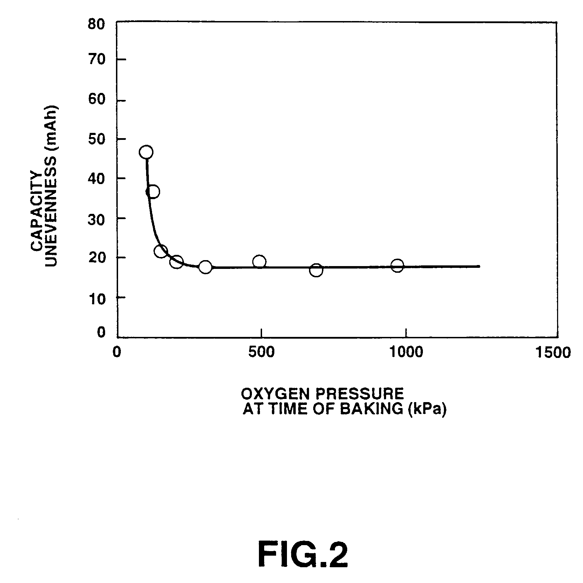

The battery capacity (mean value of ten batteries) and the degree of unevenness of battery capacity are shown in Table 2, and investigation results of the degree of unevenness of battery capacities of the embodiments 1 to 6 and the comparative examples 1 and 2 caused to have the same Li:Ni:Co ratio with respect to changes of oxygen pressure at the time of baking are shown in FIG. 2.

**Table 2A**

| | BATTERY CAPACITY (mAh) | | | | | UNEVENNESS R (MAX. - MIN.) |
|---|---|---|---|---|---|---|
| | SYNTHESIS 1 | SYNTHESIS 2 | SYNTHESIS 3 | SYNTHESIS 4 | SYNTHESIS 5 | |
| EMBODIMENT 1 | 1012 | 1004 | 996 | 990 | 1003 | 22 |
| EMBODIMENT 2 | 1003 | 1011 | 992 | 1003 | 1011 | 19 |
| EMBODIMENT 3 | 997 | 1008 | 990 | 1005 | 1000 | 18 |
| EMBODIMENT 4 | 1005 | 993 | 989 | 1008 | 997 | 19 |

**Table 2B**

| | BATTERY CAPACITY (mAh) | | | | | UNEVENNESS R (MAX. - MIN.) |
|---|---|---|---|---|---|---|
| | SYNTHESIS 1 | SYNTHESIS 2 | SYNTHESIS 3 | SYNTHESIS 4 | SYNTHESIS 5 | |
| EMBODIMENT 5 | 1012 | 995 | 998 | 1001 | 998 | 17 |
| EMBODIMENT 6 | 1006 | 1002 | 999 | 1009 | 992 | 17 |
| EMBODIMENT 7 | 1004 | 1012 | 995 | 993 | 1001 | 19 |
| EMBODIMENT 8 | 987 | 991 | 999 | 981 | 979 | 20 |

**Table 2C**

| | BATTERY CAPACITY (mAh) | | | | | UNEVENNESS R (MAX. - MIN.) |
|---|---|---|---|---|---|---|
| | SYNTHESIS 1 | SYNTHESIS 2 | SYNTHESIS 3 | SYNTHESIS 4 | SYNTHESIS 5 | |
| COMPARATIVE EXAMPLE 1 | 975 | 1005 | 958 | 994 | 981 | 47 |
| COMPARATIVE EXAMPLE 2 | 1006 | 973 | 983 | 995 | 969 | 37 |
| COMPARATIVE EXAMPLE 3 | 982 | 1003 | 996 | 988 | 988 | 21 |
| COMPARATIVE EXAMPLE 4 | 1001 | 980 | 994 | 996 | 991 | 21 |
| COMPARATIVE EXAMPLE 5 | 952 | 989 | 967 | 993 | 961 | 41 |

As understood from FIG. 2, the degree of unevenness of battery capacity changes in dependency upon the oxygen pressure at the time of baking. Namely, in the range where the oxygen pressure is less than 147.1 kPa, according as oxygen pressure becomes large, the degree of unevenness of battery capacity becomes small. In the range where oxygen pressure is 147.1 kPa or more, it maintains lower value of about 20, and does not change so as to take a value lower than that.

From the above fact, it has been found that setting the oxygen pressure to 147.1 kPa or more in baking lithium salt and transition metal salt under oxygen atmosphere is effective in reducing unevenness of battery capacity of the battery.

It should be noted that while, in the embodiment 7, in baking, the oxygen pressure is set to a lower value of 98.1 kPa in the beginning and is set to a higher value of 490.3 kPa from the middle, the degree of unevenness of battery capacity takes a lower value of 20 similarly to the other embodiments. From this fact, it has been found that it is not required that the oxygen pressure is set to 147.1 kPa or more over the entirety of the baking process, but it is sufficient that the oxygen pressure is set to 147.1 kPa or more at least at a certain time of the baking process.

As is clear from the foregoing description, in accordance with this invention, a mixture of a lithium salt and a transition metal salt is baked under oxygen atmosphere, and in synthesizing a lithium transition metal compound oxide having a composition of Li_{X}Ni_{y}M_{1-y}O₂ (M is one kind of transition metal or more, and x and y are respectively expressed as 0.05 ≤ x ≤ 1.10, 0.5 ≤ y ≤ 1.0), the oxygen pressure in the atmosphere in baking is set to 147.1 kPa or more at a certain time of the baking process. Accordingly, it is possible to obtain a lithium transition metal compound oxide having a uniform composition and characteristic and exhibiting excellent function as the active cathode material.

Accordingly, when the cathode is constituted by using the lithium transition metal compound oxide synthesized in this way as active cathode material, it is possible to provide a lithium secondary battery which is excellent in cycle characteristic, has high energy density and low material cost, and has uniform quality of no unevenness of battery capacity.

## Claims

1. A method of producing active cathode material for lithium secondary battery causing a low degree of unevenness of battery capacity.
in which a mixture of a lithium salt and a transition metal salt is baked under oxygen atmosphere, and wherein in synthesizing a lithium transition metal compound oxide having a composition of LiₓNi_{y}M_{1-y}O₂ (M is one kind of transition metal or more, and x and y are respectively expressed as 0.05 ≤ x ≤ 1.10, 0.5 ≤ y ≤ 1.0), the oxygen pressure in the atmosphere in baking is set to 147. 1 kPa or more at least at a certain time of the baking process.

2. The method of producing active cathode material for lithium secondary battery as set forth in claim 1. wherein the lithium transition metal compound oxide to be synthesized has the composition of LiₓNi_{y}Co_{1-y}O₂ (x and y are respectively expressed as 0.05 ≤ x ≤ 1.10, 0.55 ≤ y ≤ 1.0).

3. The method of producing active cathode material for lithium secondary battery as set forth in claim 1. wherein the oxygen pressure in the atmosphere in baking is set from 147.1 kPa to 980.6 kPa.

## Patentansprüche

1. Verfahren zur Herstellung aktiven Kathodenmaterials für Lithium-Sekundärbatterien, das einen geringen Grad an Ungleichmäßigkeit der Batteriekapazität verursacht,
bei dem eine Mischung eines Lithiumsalzes und eines Übergangsmetallsalzes in einer Sauerstoffatmosphäre gebrannt wird, und bei dem bei der Herstellung eines Lithium-Übergangsmetall-Mischoxids; das die Zusammensetzung LiₓNi_{y}M_{1-y}O₂ (M entspricht einem oder mehreren Übergangsmetallen und für x und y gilt 0,05 ≤ x ≤ 1,10 bzw. 0,5 ≤ y ≤ 1,0) aufweist, zumindest während einer gewissen Zeit des Brennprozesses ein Sauerstoffdruck in der Atmosphäre, in der das Brennen erfolgt, von 147,1 kPa oder höher gewählt wird.

2. Verfahren zur Herstellung aktiven Kathodenmaterials für Lithium-Sekundärbatterien nach Anspruch 1, bei dem das herzustellende Lithium-Übergangsmetall-Mischoxid die Zusammensetzung LiₓNi_{y}Co_{1-y}O₂ (für x und y gilt 0,05 ≤ x ≤ 1,10 bzw. 0,5 ≤ y ≤ 1,0) aufweist.

3. Verfahren zur Herstellung aktiven Kathodenmaterials für Lithium-Sekundärbatterien nach Anspruch 1, bei dem ein Sauerstoffdruck in der Atmosphäre, in der das Brennen erfolgt, im Bereich von 147,1 kPa bis 980,6 kPa gewählt wird.

## Revendications

1. Procédé de fabrication d'un matériau actif cathodique pour une batterie secondaire au lithium provoquant un faible degré d'inégalité de capacité de batterie,
dans lequel un mélange de sel de lithium et un sel de métal de transition est cuit sous une atmosphère d'oxygène, et dans lequel
en synthétisant un oxyde de composé de métal de transition de lithium ayant une composition de LiₓNi_{y}M_{1-y}O₂ (M est un ou plusieurs types de métaux de transition, et x et y sont respectivement exprimés par 0,05 ≤ x ≤ 1,10, 0,5 ≤ y ≤ 1,0), la pression d'oxygène de l'atmosphère de cuisson est réglée à 147,1 kPa ou plus au moins pendant un certain temps du traitement de cuisson.

2. Procédé de fabrication d'un matériau actif cathodique pour une batterie secondaire au lithium selon la revendication 1, dans lequel l'oxyde de composé de métal de transition de lithium à synthétiser a la composition de LiₓNi_{y}Co_{1-y}O₂ (x et y sont respectivement exprimés par 0,05 ≤ x ≤ 1,10, 0,5 ≤ y ≤ 1,0).

3. Procédé de fabrication d'un matériau actif cathodique pour une batterie secondaire au lithium selon la revendication 1, dans lequel la pression d'oxygène de l'atmosphère de cuisson est réglée de 147,1 kPa à 980,6 kPa.
